# EUROPEAN PATENT APPLICATION

(11) **EP 3 196 810 A1**
(43) Date of publication of application: **26.07.2017**
(21) Application number: 16250001.1
(22) Date of filing: 23.01.2016
(51) Int. Cl.: G06Q 10/00

(54) **MONITORING A RETAIL ENVIRONMENT**

(71) Applicant: Aprium Tech Limited, London W1T 1QL (GB)
(72) Inventor: The designation of the inventor has not yet been filed
(74) Representative: Atkinson, Ralph

(57) **Abstract**

A procedure for monitoring activities within a retail environment is disclosed. A plurality of items of merchandise (601) are offered for sale to perspective customers. Each of these customers carries a mobile device (102). A communication enabled tag (107) having a unique tag-code (507) is attached to each item (601). The tag is activated, so as to bring the tag out of a minimal power consumption mode and into an operational mode, in response to an interaction (Fig 7) with one of the mobile devices. The tag-code (507) is transmitted (202) from operational tags (107) to their respective interacting mobile device (102) and this tag-code, along with a customer identification code from the interacting mobile device, is relayed to an administration system (117). At the administration system, associations between item identifications and customer identifications code are recorded (531). In this way, it is possible to record details of when a purchase has been made. Furthermore, it is also possible to collect data identifying when purchases were nearly made, such that this information (215) may be used for marketing activities.

## Description

The present invention relates to an apparatus for monitoring activities within a retail environment. The present invention also relates to a method of monitoring activities within a retail environment, in which a plurality of items of merchandise are being offered for sale to prospective customers, each carrying a mobile device.

It is known to apply tags to items of merchandise, primarily to detect when items have been stolen and to deter thieves from stealing items. Recently, more sophisticated examples of tags of this type have been shown. For example, it is possible for active tags to transmit data for the benefit of customers and/or sales assistants.

According to an aspect of the present invention, there is provided an apparatus for monitoring activities within a retail environment, in which a plurality of items of merchandise are offered for sale and prospective customers carry mobile devices, comprising: a plurality of communication enabled tags, each attachable to a respective one of said items; and an administration system having a data processing system and a data storage system, wherein each said tag includes: a processor configured to operate in a minimal power consumption mode; an activating device for bringing said processor out of said minimal power consumption mode and into an activated mode, following an interaction with one of said mobile devices; and a radio transmission device for transmitting a tag-code to an interacting mobile device to thereby associate a transmitting tag with an interacting mobile device; and: each interacting mobile device is configured to relay said tag-code along with a customer identification code to said administration system; and: at said administration system, said processing system is configured to write each association made between a tag-code and a customer identification code to said storage system.

In an embodiment, after a purchase has been made, it may be necessary for a sales assistant to physically remove the tag. In a further embodiment, it is possible for the tag to include an auto release mechanism that is activated in response to receiving a release code after the sale has been confirmed. In a preferred embodiment, each attached tag is releasable by a customer after the item of merchandise to which the tag is attached has been purchased. In this embodiment, a tag may cause an alarm signal to be generated if the item is removed from a retail environment before the tag has been correctly released. Furthermore, in this embodiment, it is possible for an alarm to be raised if a tag is removed by a customer prior to a sale being completed. Thus, in an embodiment, the administration system is configured to return data back to an interacting mobile device to facilitate the purchasing of an item.

It is possible for the nature of the interaction of a tag with a mobile device to take many forms. These include physical interactions and electronic interactions. However, in an embodiment, it is desirable for power consumption to be as low as possible during the minimal power consumption mode. Thus, in a preferred embodiment, the activating device is a piezo-electric device configured to generate an interrupt signal in response to receiving a physical impact.

According to a second aspect of the present invention, there is provided a method of monitoring activities within a retail environment, in which a plurality of items of merchandise are being offered for sale to prospective customers each carrying a mobile device, comprising the steps of: attaching a communication enabled tag having a unique tag-code to each said item; activating said tag to bring said tag out of a minimal power consumption mode and into an operational mode in response to an interaction with one of said mobile devices; transmitting said tag-code from operational tags to their respective interacting mobile device; relaying said tag-code along with a customer identification code from interacting mobile devices to an administration system; and at said administration system, recording each association made between an item identification code and a customer identification.

In an embodiment, tag-codes are related to item identifications, such a stock keeping unit (SKU) codes during a tag attachment process; and associations between item identifications and customer identifications are recorded. Furthermore, in an embodiment, associations between an item and a customer are analysed when the association does not progress to a sale being made. In an embodiment, it is also possible for the durations of these associations to be recorded. Furthermore, in an embodiment, it is possible for the location of mobile devices to be recorded when associations are made.

Other information gathered during a tag-mobile device interaction may be usefully recorded.

In an embodiment, a merchandising system is configured to supply merchandising data to customers recorded as forming an association that did not progress to a sale.

The invention will now be described by way of example only, with reference to the accompanying drawings, of which;
Figure 1 shows a retail environment that includes apparatus for monitoring activities;
Figure 2 shows a protocol diagram identifying methods that operate within the environment of Figure 1;
Figure 3 shows a schematic representation of a mobile device;
Figure 4 shows operations performed by the mobile device shown in Figure 3;
Figure 5 shows database tables maintained at the administration system identified in Figure 1;
Figure 6 shows a procedure for associating tag-codes with item identification codes;
Figure 7 shows an item displayed in a retail environment;
Figure 8 shows a schematic representation of a tag circuit;
Figure 9 details operations performed by the tag circuit shown in Figure 8;
Figure 10 shows a rack of server systems;
Figure 11 shows a schematic representation of the server systems shown in Figure 10;

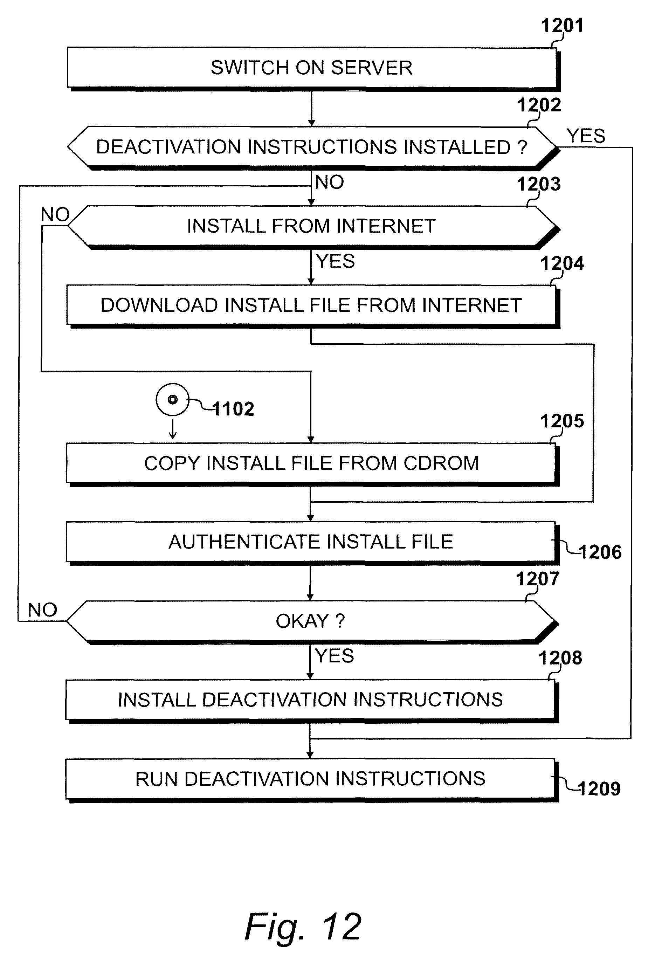

Figure 12 details operations performed by a server system identified in Figure 11, to install instructions;
Figure 13 details the operation of a server system of Figure 11 when running the instructions installed following the procedure of Figure 13;
Figure 14 shows a user interaction with a mobile device for purchasing an item;

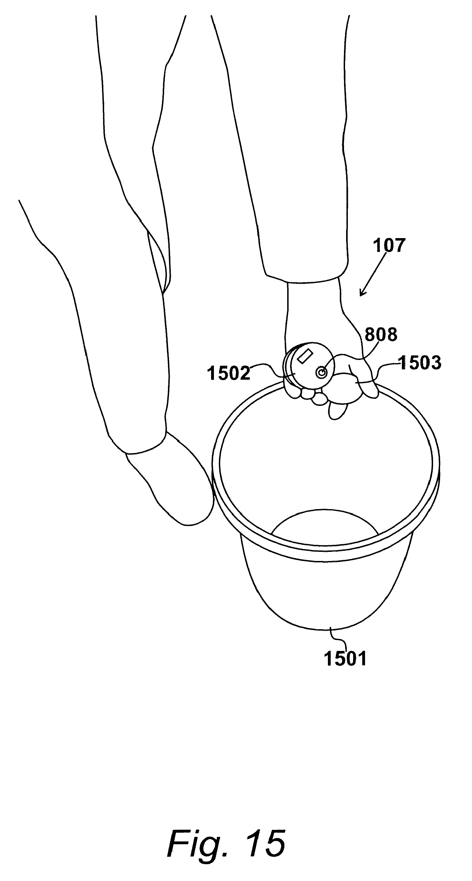

Figure 15 shows a tag being released; and
Figure 16 details operations performed by a merchandising system.

### Figure 1

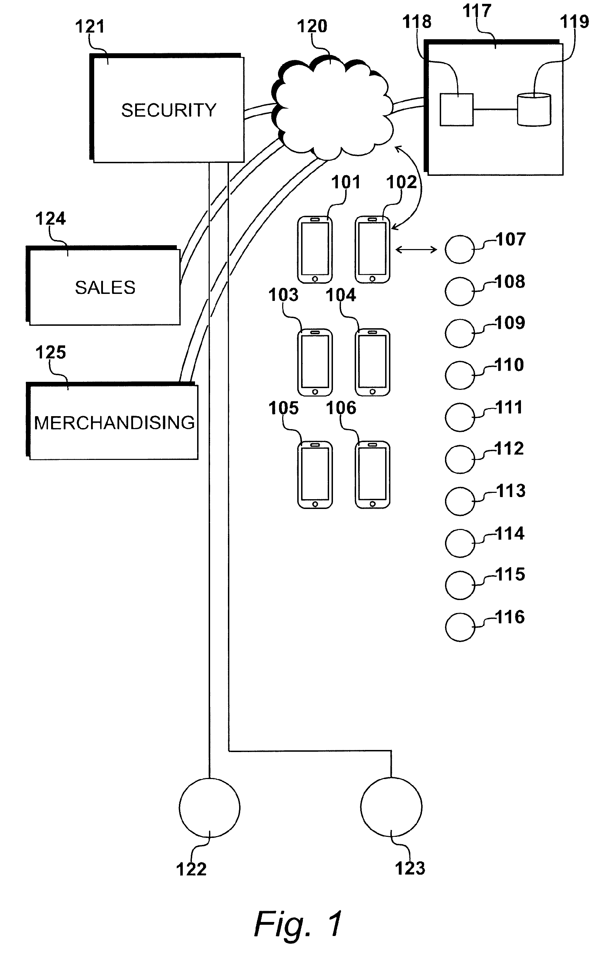

A retail environment is shown in Figure 1 that includes apparatus for monitoring activities, while items of merchandise are offered for sale and prospective customers carry mobile devices 106 that may take the form of smart mobile cellular telephones.

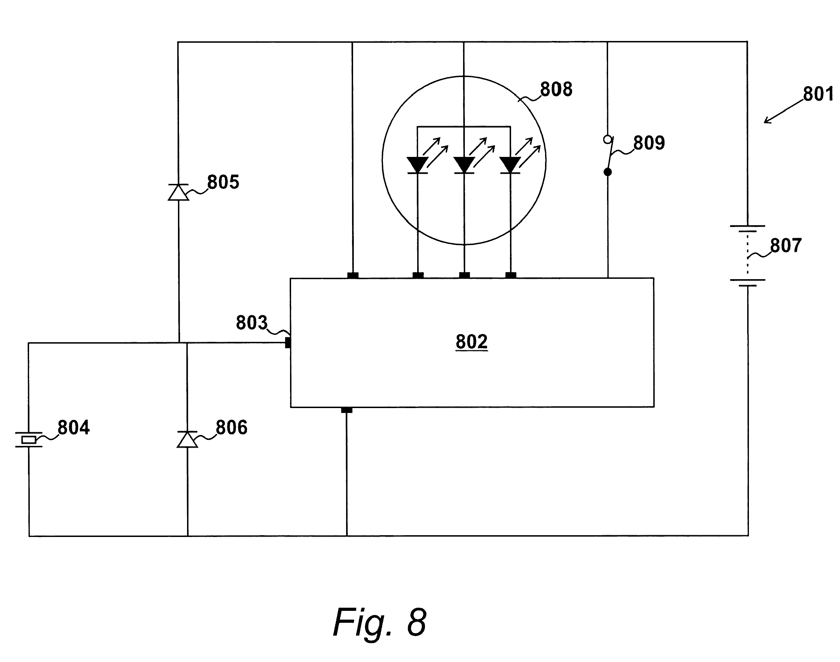

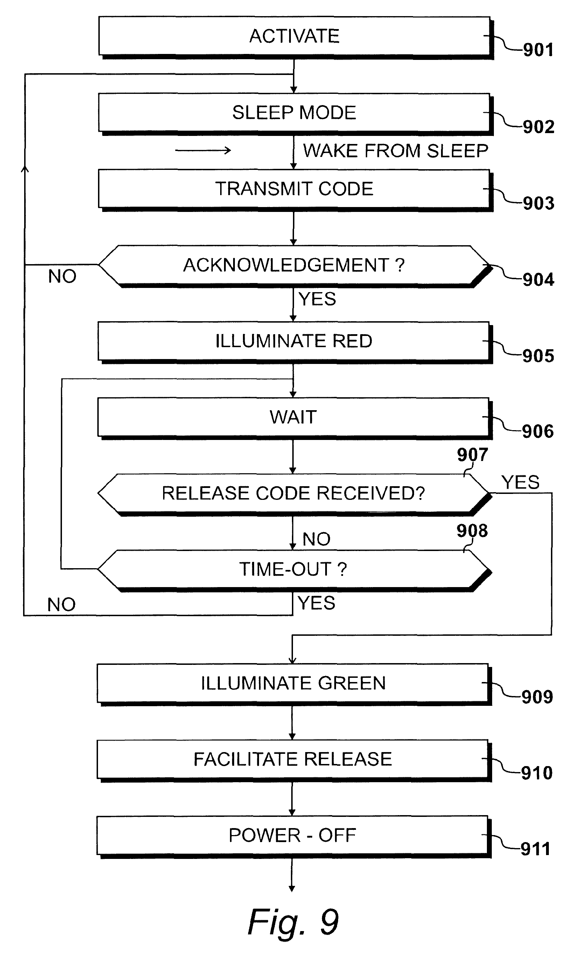

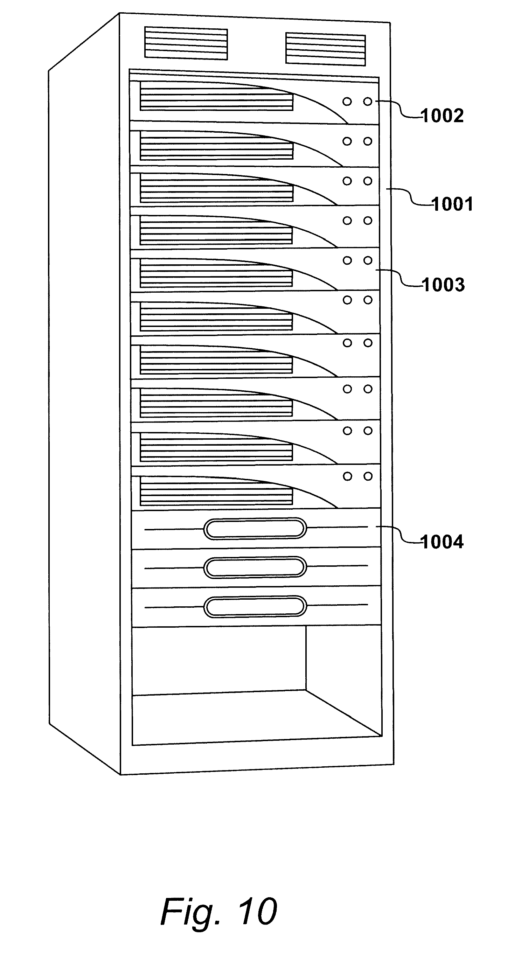

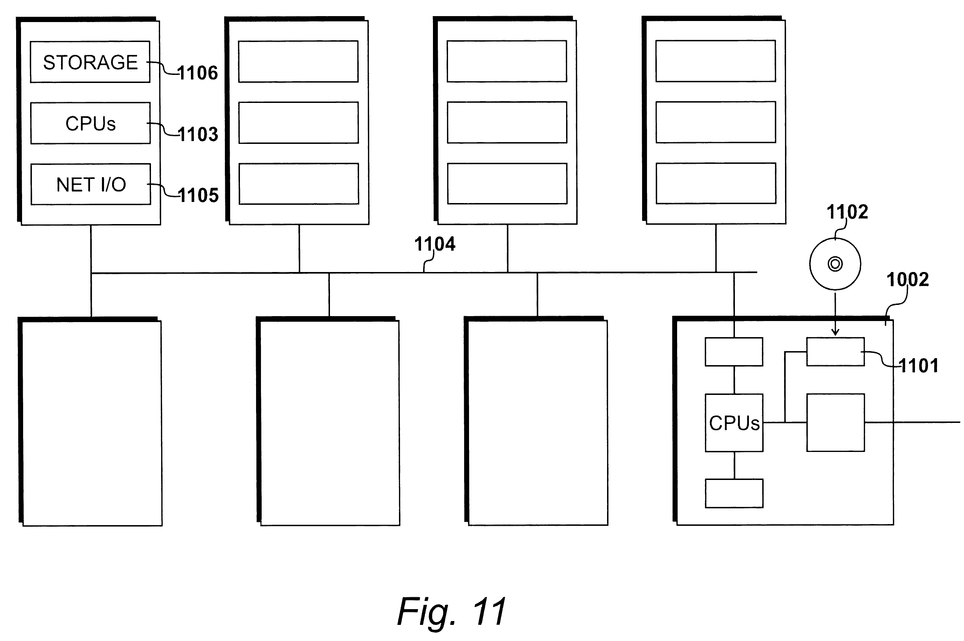

A plurality of communication enabled tags 107 to 116 are provided, each attachable to a respective item. In addition, an administration system 117 has a data processing system 118 and a data storage system 119, detailed further in Figures 10 and 11. Each tag includes a processor, as detailed in Figures 8 and 9, configured to operate in a minimal power consumption mode. Furthermore, each tag, such as tag 107, also includes an activating device for bringing a processor out of the minimal power consumption mode and into an activated mode, following an interaction with one of the mobile devices, such as mobile device 102.

Tag 107 also includes a radio transmission device for transmitting a tag-code to interacting mobile device 102, to thereby associate the transmitting tag 107 with the interacting mobile device 102. Each interacting mobile device, including mobile device 102, is configured to relay this tag-code, along with a customer identification code, to the administration system 117. At the administration system 117, the processing system 118 is configured to write each association made between a tag-code and a customer identification code to the storage system 119.

The administration system may be local to the retail environment or it may be remotely based and configured to communicate via a network 120. The functionality of the administration system 117 may be identified as being "cloud-based".

Locally, a security system 121 monitors the inappropriate releasing of tags 107 to 116 and the presence of un-removed tags at the position of detectors 122 and 123, usually located near an exit from the retail environment.

In an embodiment, an item may be purchased by using a mobile device, such as device 102, after receiving item related information. Thus, initially, a user may be presented with an interface inviting the user to indicate that they wish to purchase the item or, alternatively, inviting the user to confirm that they do not wish to purchase the item. If an indication is made to the effect that the item is to be purchased, a further interaction may take place with a sales system 124 via network 120. Systems of this type are generally available and are well known to those skilled in the art.

If a customer indicates that they are not interested in purchasing the item, no further action is taken and the tag is no longer associated with the mobile device concerned. However, in an embodiment, it is possible to record the duration of the time during which the association actually existed. Furthermore, if a user does not activate either of these indications, it is possible for the association to terminate after a predetermined period of time, usually identified as a "time-out" or when the strength of the signal received from a tag by a mobile device has fallen below a predetermined threshold, which can usually be taken to indicate that the customer has left the immediate vicinity of the tag in question. Thus, in this way, having initiated an association, it is not necessary for a user to take any further action and the system will itself reset, after the temporary association has been relayed to the administration system 117.

### Figure 2

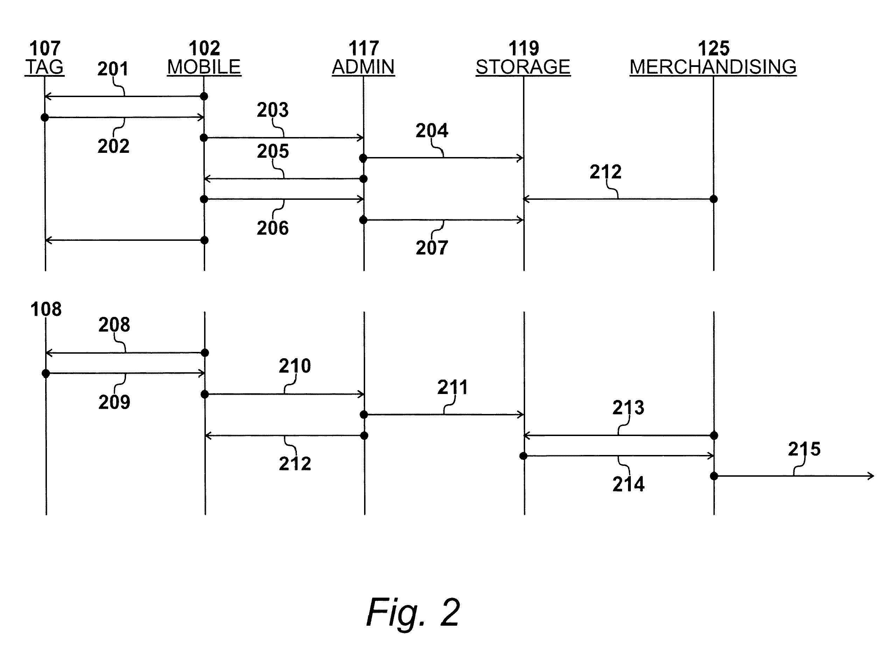

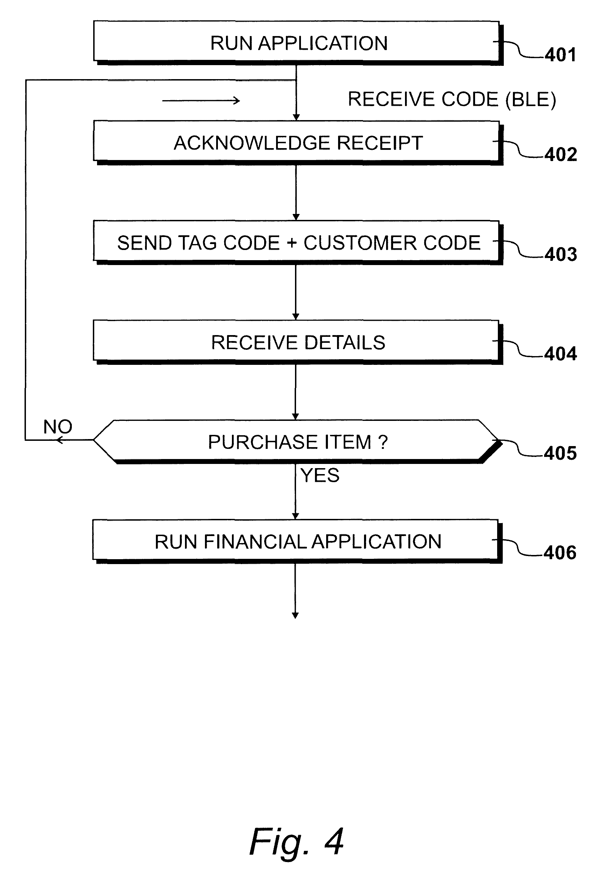

A protocol diagram is shown in Figure 2, identifying methods that operate within the environment identified in Figure 1. The method monitors activities within the retail environment illustrated in Figure 1, in which a plurality of items of merchandise are being offered for sale to prospective customers each carrying a mobile device 101 to 106. Each mobile device runs an application (detailed in Figure 4) capable of managing the communications described and having information relating to a user-customer stored, for example following a log-in procedure.

A communication enabled tag 107 to 116 having a unique tag-code is attached to each item. As illustrated at 201, tag 107 is activated, to bring the tag out of the minimal power consumption mode and into an operational mode, in response to an interaction with mobile device 102. In response to this interaction, as shown at 202, the mobile device transmits the tag-code to the interrupting mobile device 102. The mobile device 102 relays the tag-code, along with a customer identification code, from the interacting mobile device 102, to the administration system 117, as shown at 203. At the administration system, this association, of a tag-code and a customer identification code, is written to storage system 119, as shown at 204. Thus, in this way, even when articles are not actually purchased, the fact that a mobile device/tag interaction has taken place and thus an association has been made, representing a potential customer's interest in a particular item, is recorded to storage to facilitate subsequent processing. Other information, such as the location and local time of the initiation of the interaction may also be written to storage.

In the example of Figure 2, after writing this information to storage, the administration system 117 looks up the tag code from a database where the tag-item associations have been previously stored and provides further details of the item to the mobile device 102, as shown at 205. On this occasion, and for the purpose of illustration, the customer indicates, via mobile device 102, to the administration system 117 that a purchase of the item is to be made, as shown at 206. Further operations at this stage are transferred to a sales processing system 124. This allows a purchase to be made and following the receipt of confirmation of the purchase from the sales system, at 207 the administration system 117 writes data to storage device 119 to the effect that a sale has taken place.

For the purposes of this illustration, it is assumed that mobile device 102 now conducts a similar interaction with tag 108. As illustrated at 208, tag 108 is activated so as to bring the tag out of a minimal power consumption mode and into an operational mode, in response to an interaction with mobile device 102. Tag 108 transmits a tag-code to the interacting mobile device 102, as shown at 209. As shown at 210, mobile device 102 relays the tag-code, along with a customer identification code, to the administration system 117 and as illustrated at 211, details of this association are written to storage 119.

As illustrated at 212, the administration system 117 returns item related data to the mobile device 102. However, on this occasion, no further action is taken and a procurement of the item does not take place. Consequently, for this entry in storage 119, there is no confirmation to the effect that a sale took place. Thus, this represents a situation where an association has been identified but no sale has taken place. Situations of this type are of particular interest to the merchandising system 125, on the basis that an interest has been shown but an actual purchase as not taken place.

In this illustration, the interaction may have ended after a significant duration, by the received signal strength falling below a threshold; indicating that the customer had left the immediate vicinity of the tag. The actual duration of the interaction between a tag and a mobile device, while in close proximity, provides useful information that is recorded by the administration system.

As illustrated in Figure 2, periodically, merchandising system 125 investigates records held within storage system 119. A first investigation 212 is made in relation to the first interaction previously described and a second interrogation 213 is made with respect to the second interaction previously described. For the first interaction, a sale did take place and this information was written to storage at 207. For the purposes of this illustration, this situation is not of interest to the merchandising system 125 and no further action is taken.

On the second interaction, the association was written to storage 119 at 211 but during the duration of the association, no further data transfers took place. This situation is of interest to the merchandising system 125 and the condition is returned from storage 119 to the merchandising system 125 at 214. The mechanising system 125 is then in a position to make use of this information, as illustrated at 215.

### Figure 3

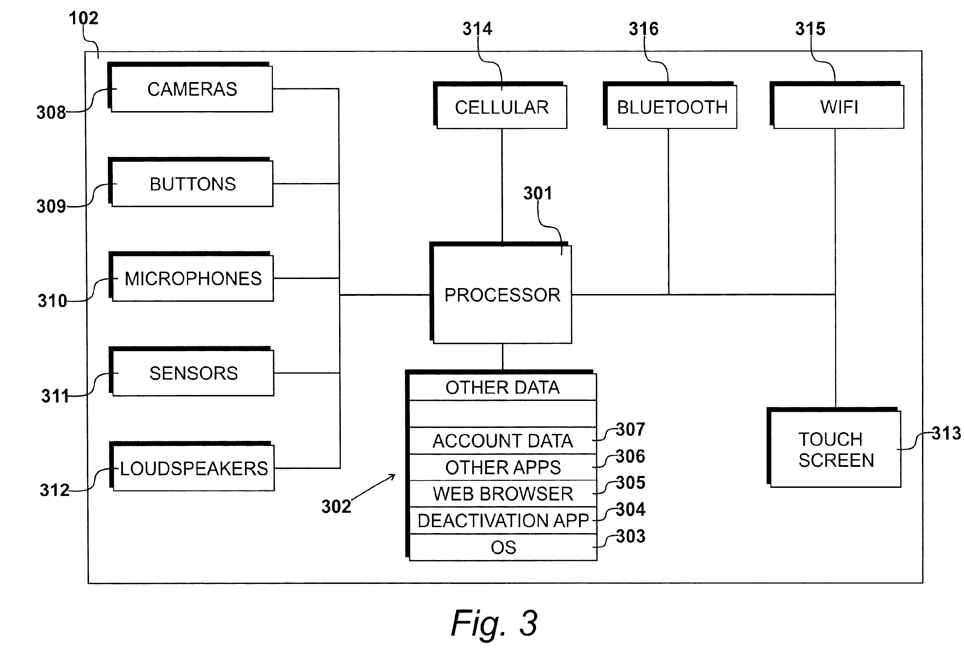

A schematic representation of mobile device 102 is illustrated in Figure 3. A processor 301 may have up to eight processing units, each communicating with memory devices implemented as flash and volatile random access memory. In most implementations, the random access memory provides a cache for instructions and data that have been used most recently.

A memory map is illustrated at 302, showing instructions that include an operating system, and a tag deactivation application 304 in accordance with an embodiment of the present invention. Typically, memory is also reserved for a web browsing application 305, along with other applications 306. At 307, account data is retained given that, in order for a purchase to take place, it is necessary for a customer to have an account with the retail environment, or with a third party established to act on behalf of the retailer, such as a digital wallet provider. In an embodiment, a customer identification code related to such an account is supplied to the administration system from the mobile device, while relaying tag identification data, so as to identify the specific customer. Thus, it would be possible for several users to use the same device, each being provided with their own account data 307. Similarly, account data is required in order to complete a transaction with the sales system 124.

As illustrated in Figure 3, the mobile device includes interfaces for communicating with cameras 308, buttons 309, microphones 310, sensors 311 (including movement sensors) and loudspeakers 312. Information is displayed on a touchscreen 313 and communication may take place via a cellular network interface 314 or via a local Wi-Fi interface 315.

When implementing aspects of the present invention, including a communication with a tag, such as tag 107, activation of a low energy Bluetooth module 316 is required. Thus, when an association occurs between a mobile device (such as device 102) and a security tag (such as tag 107) this association is effectively implemented as a Bluetooth communication. Thus, after activating a tag, so as to bring its processor out of a minimal power consumption mode and into an activated mode, a Bluetooth low energy connection is made between a mobile device and the tag, thereby allowing the tag to transmit its unique tag-code to the mobile device.

### Figure 4

Operations performed by a mobile device, such as device 102, when implementing the deactivation application 304 are illustrated in Figure 4.

Upon entering a retail environment, a user may select the application, causing it to run at step 401. Alternatively, the application may continue to run in the background of the mobile device and will be brought to the foreground of the device upon automatically identifying that a user has entered an appropriate retail environment. Thus, in an implementation, many related or unrelated retail environments may communicate with the administration system 117.

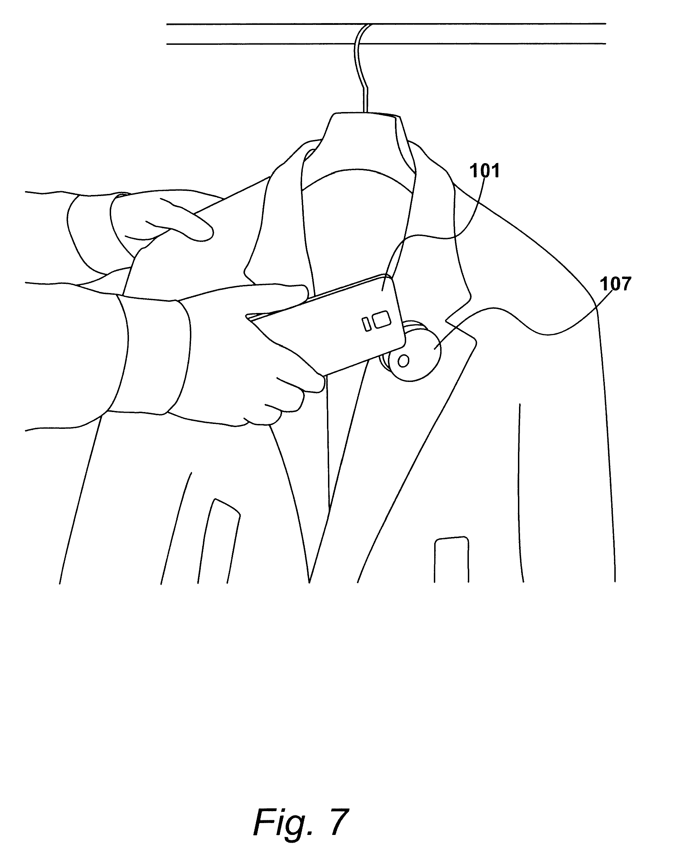

As previously described, the method of the embodiment requires an interaction between the mobile device and a tag, such as tag 107. This may involve manually making contact between the mobile device and the tag, as illustrated in Figure 7. In an embodiment, a slight impact is required, causing a piezo-electric device, within tag 107, to generate an electrical signal, as described with respect to Figure 8. Thus, in an embodiment, the tag 107 is brought out of its minimal power consumption state by responding to a physical impact between the mobile device 102 and the tag 107.

In alternative embodiments, other activating sensors or devices may be deployed within each tag, such as nearfiled communication devices.

Devices within the mobile phone, including movement sensors 311 and microphone 310, may detect the impact with the tag but, in this embodiment, the impact is only relevant to the tag and is not relevant to the mobile device. As illustrated in Figure 4, the method implemented by the mobile device responds to the Bluetooth output from the tag after the tag has been activated. Thus, in response to receiving a tag-code via Bluetooth, a receipt is acknowledged at step 402, thereby effectively pairing the mobile device 102 and the tag 107.

At step 403, the tag-code received from the tag via the Bluetooth connection and a customer code, identifying the particular customer, are sent in combination to the administration system 117. In an embodiment, it would be possible for this transmission to occur via a local Wi-Fi network. However, in a preferred implementation, the cellular interface 314 is deployed, given that this requires minimal intervention on the part of the user.

After transmitting the user and tag-codes to the administration system, the administration system returns details of the item to which the tag is attached at step 404 and at step 405 a question is asked as to whether the item is to be purchased. If this question is answered in the negative, no further action is required on the part of the mobile device and it will therefore await the receipt of a further Bluetooth signal from an activated tag. The fact that a customer has been browsing a particular item has been recorded at the administration system, following the transmission at step 403.

If the question asked at step 405 is answered in the affirmative, the financial application is executed in order to securely effect payment, whereafter the mobile device is again receptive to the next tag activation.

### Figure 5

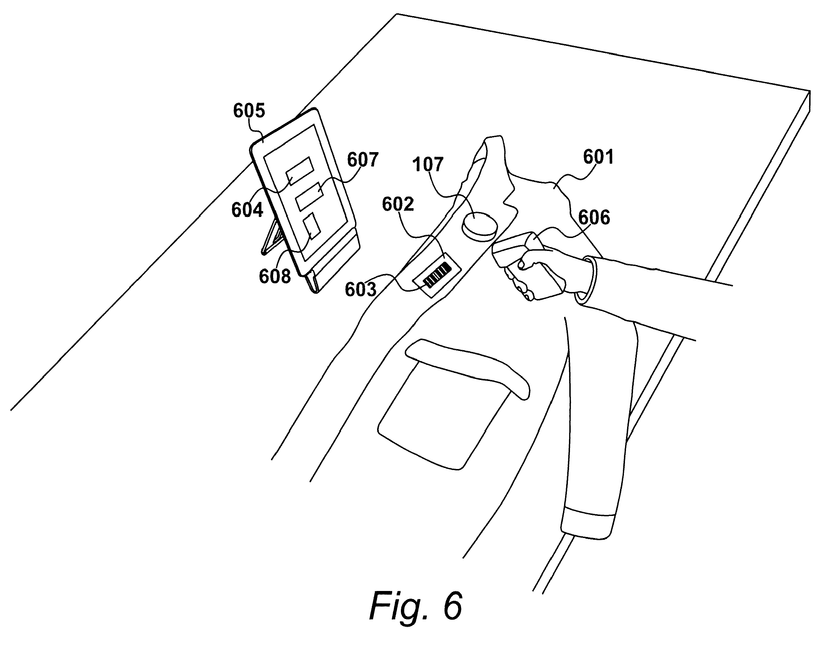

In an embodiment, the item details received at step 404 include item related data that is read from a stock database, indexed with reference to stock keeping units. The database includes a table 501 which relates each tag-code 502 to a stock keeping unit (SKU) code 503 that is relevant for the particular item to which the tag is attached. Thus, in this example, tag-codes 507, 508, 509 and 510 have been recorded for tags 107, 108, 109 and 110 respectively. As illustrated in Figure 6, tag 107 has been attached to a jacket, identified by SKU code 521. For the purposes of this illustration, it is assumed that tag 108 has been attached to a similar jacket having the same SKU code 521. Tag 109 has been attached to a different item identified by SKU code 522 and tag 110, having tag-code 510, has been attached to a similar item to which tag 109 has been attached and is therefore related to the same SKU code, namely 522. Thus, if tag 107 or tag 108 are activated, the same details will be received at step 404 given that, from a stock keeping view point, the items are instances of the same unit.

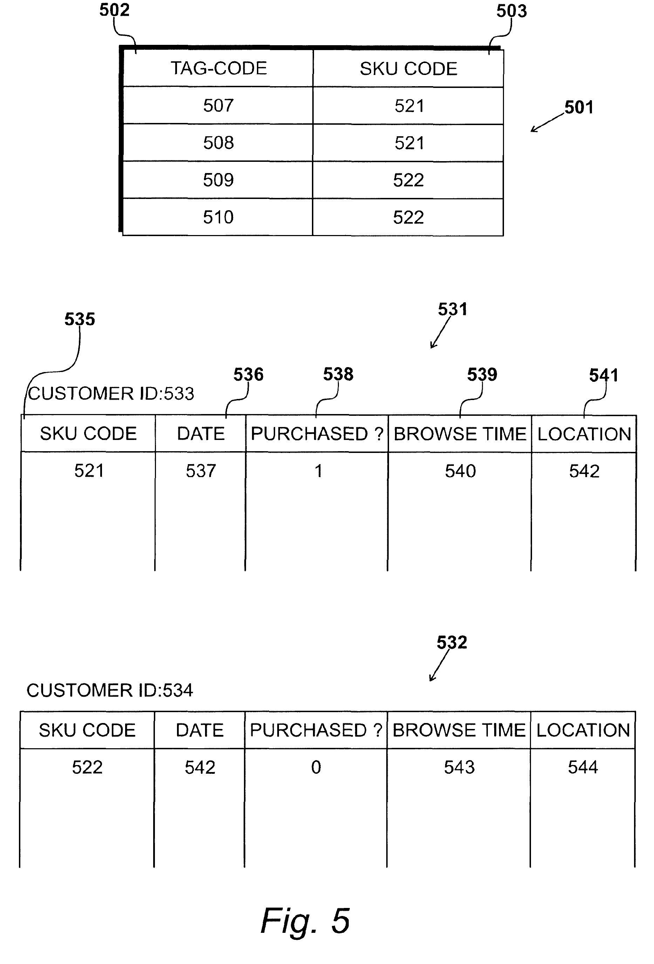

The database maintains a record for each customer using the system. In the example shown in Figure 5, a fist customer table 531 is shown, along with a second customer table 532. Each table has a customer identification, identified as 533 in table 531 and identified as 534 in table 532.

For the purposes of this example, it is assumed that customer 533 has purchased the item to which tag 107 has been attached. To record this, first column 535 records SKU code 521. A second column 536 records the date and time 537 on which the item was purchased and a "purchased?" column 538 has a flag set to unity, confirming that a purchase took place. A column 539 records a browse time 540 and a column 541 records the location data 542. In an embodiment, the location data 542 may record a particular retail environment. Alternatively, this data may also record positions within a particular retail environment, possibly identifying specific departments etc.

In an embodiment, purchases may be made almost anywhere within the retail environment, such as within a changing room. It is anticipated that customers will have given permission for the system to log details of this type during a set-up procedure,

For the purposes of this example, it is assumed that customer 534 activates tag 110, resulting in the transmission of tag-code 510. With reference to table 501, this identifies SKU code 522 which was activated on date and time 542. On this occasion, the item was not purchased, therefore the flag in column 538 is not set. However, browse time 543 is recorded, along with location data 544.

The browse time 543 identifies the duration over which a mobile device, say mobile device 104, was communicating with tag 110. For the purposes of merchandising, it may be assumed that the duration of this browsing activity correlates to a customer's interest in terms of actually purchasing the item. Information of this type is readily available in online environments. However, an embodiment of the present invention makes this information available within a physical retail environment.

### Figure 6

In an alternative embodiment, it would be possible to store data on the tag itself, identifying details of the item to which the tag has been attached. Each item could be given a unique code, as an alternative to an SKU code and this information could be retained on the tag itself. Furthermore, it would be possible for the tag to include data relating to the price of the item and it would be possible for an item to be purchased using a mobile device communicating exclusively with a sales system, similar to sales system 124, without the involvement of the administration system 117. However, a significant disadvantage of this approach is that it does not facilitate the collection of merchandising data and thereby places the physical retail environment at a disadvantage compared to an online retailing environment.

In a preferred embodiment, data is retained at the administration system, as illustrated in Figure 5 and it is only necessary for each individual tag 107 to 116 to retain and broadcast a unique application-specific code. Thus, the code may be read from the tag but it is not necessary to change the code retained within the tag when the tag is applied to a different item; provided that the association between the tag code and the new item is known within the system.

In Figure 6, tag 107 has been secured to an item 601. In an embodiment, tag 107 may be implemented as two components secured by a pin that extends through the item 601.

Item 601 carries a label 602 on which a (conventional) barcode 603 has been printed. An operative activates tag 107 while the tag is being secured to item 601. A Bluetooth enabled device receives details of the tag-code and the tag-code is displayed at 604 to an operative via a display device 605. In an embodiment, display device 605 is itself Bluetooth enabled. Alternatively, a local processing system is configured to receive Bluetooth signals and communicate, possibly using Wi-Fi, to the display device 605.

Having captured the tag-code, an operative scans barcode 603 using a wireless-enabled hand-held barcode scanner 606. This results in the SKU code being displayed at 607 on the display device 605. In an embodiment, display device 605 is touch sensitive. An operative is therefore invited to confirm this association by a manual press at location 608 on display 605. Thus, after activating region 608, a record is created in database table 501 stating that tag-code 507 (broadcast by tag 107) has been attached to an item having SKU code 521.

In an alternative embodiment, these associating operations may be performed exclusively within a multifunction hand-held device.

### Figure 7

After a tag has been attached to an item and the relationship between the tag-code and the SKU code (or other item identifier) has been recorded in database table 501, the item is ready to be located within the retail environment. In a preferred mode of operation, a customer is invited to (lightly) tap their mobile phone 101 physically upon tag 107. This ensures that the tag receives a sufficiently high impact force in order to cause the tag to activate, while ensuring that the mobile phone is close enough to the tag to receive the tag-code transmission, that follows shortly thereafter. After activation, the phone and the tag remain in communication, by repeating transmissions from the tag, provided that the signal strength, as measured by the mobile device, is sufficiently high. It is not actually necessary for the phone 101 to be brought into contact with the tag 107 and another means of achieving this activation could be deployed.

Communication is maintained, typically, within a range of several metres such that, for example, a customer may take the item to a changing room while their mobile phone is retained in a pocket or a bag. However, if the customer moves away from the item, eventually, the signal strength measured by the mobile device will drop below a predetermined threshold and the association will be terminated. As previously described, in an embodiment, a timeout situation may also arise, terminating the association, even while a customer is within range to receive further transmissions. If a customer wishes to re-establish an association, with a view to purchasing the item, the process can be repeated by impacting upon the tag 107 again.

### Figure 8

A schematic representation of a circuit 801 contained within tag 107 is shown in Figure 8. The circuit is based around a Bluetooth low energy (BLE) module 802, such as a PAN1740 BLE device. This device therefore provides the functionality of a processor, configured to operate in a minimal power consumption mode, and a radio transmission device for transmitting a tag-code to an interacting mobile device. Device 802 has an interrupt port 803 connected to a piezo transducer 804, so as to provide an activating pulse. The transducer 804 does not in itself require power but produces a significant voltage when tapped, to produce an interrupt edge. Thus, it is connected to interrupt port 803 with a first protective diode 805 and a second protective diode 806 to prevent excessive voltages being applied to the device 802.

In an embodiment, it is possible for a battery 807 to be rechargeable. However, a conventional single use battery may be deployed given that, when in the minimal power consumption made, the circuit should not require any power at all to be derived from battery 807.

In this embodiment, a three colour (red, green, blue) LED illumination component 808 is connected to three output ports. Adjustable pulsed waveforms may be supplied to each of these ports, thereby allowing a wide range of colours to be produced; which in turn may be deployed to identify different operational modes of the device. This facilitates user interactions by providing visual feedback. It should also be appreciated that alternative visual indicators may be adopted, as an alternative to the LED, to provide feedback of this type.

A switch 809 is provided for removal detection. When attached to an item, as shown in Figure 7, switch 809 is closed. However, if the device is removed, the switch will open the circuit, resulting in the processor being activated and configured to flash illuminating device 808 and provide an alarm signal to security system 121, by using a predetermined BLE transmission. Thus, removing the tag raises an alarm if the removed tag as not been associated with an account holder or purchased by an account holder.

In a first embodiment, after a purchase has been made, it may be necessary to seek assistance from staff in order to remove the tag. In a second embodiment, the tag includes an automatic releasing mechanism, such that the tag automatically disconnects and effects a removal after the purchase has been made. In a refinement to this embodiment, a further interaction may be required on the part of a customer, so that the customer is in a position to control the release. In a third embodiment, the tag can be removed relatively easily, for example by a simple manual operation, at any time by a customer. However, removing the tag before a sale has been made results in alarms being raised, as previously described.

### Figure 9

Operations performed by the tag circuit of Figure 8 are detailed in Figure 9. At step 901, the circuit is activated as part of the procedural illustrated in Figure 6. Thereafter, following the attachment of the tag to an item, the tag enters a low power consumption mode or "sleep" mode, as identified at step 902. As previously described, the tag remains in this low power consumption mode until interrupted by an impact. In the embodiment, any object can be used in order to create the impact, although users are encouraged to effect an impact using their mobile device 101. As previously described, this ensures that the mobile device is in a position to receive the transmitted tag-code and acknowledge receipt of this code at step 402.

Thus, in response to receiving an impact, the tag processor 802 is interrupted so has to wake it from its sleep mode, resulting in the tag-code being transmitted at step 903.

At step a 904 a question is asked as to whether an acknowledgement signal has been received (generated at step 402) and in response to the question being answered in the affirmative, LED device 808 is illuminated red at step 905. This indicates that the tag has been associated with a mobile device but is not ready to be removed, given that payment has not been made.

In this embodiment, the tag does not relay item information back to the mobile device (item information is supported by the administration system 117) and the tag is not involved with the financial transaction of purchasing the item. Thus, at step 906, the tag circuit enters a wait state.

After a predetermined period of time, a question is asked at step 907 as to whether a release code has been received. If answered in the affirmative, the LED device 808 is illuminated green at step 909 and release procedures are facilitated at step 910. The tag processor has now completed its allocated functionality and will therefore power down at step 911; in anticipation of receiving its next activation instructions when attached to a new item.

If, at step 904, an acknowledgment is not received from the mobile device, it may be assumed that the tag was interrupted due to an alternative type of activity; possibly due to a sales assistant rearranging items on a rack for example. The processor therefore returns to its sleep mode at step 902.

If the question asked at step 907 is answered in the negative, a question is asked at step 908 as to whether a timeout period has expired. If answered in the negative, the processor continues to wait at step 906 and then repeats step 907. Continued iteration will ultimately result in the question at step 908 being answered in the affirmative, thereby returning the processor to its sleep mode at step 902.

### Figure 10

In an embodiment, the administration system 117 may be located anywhere, provided there is a network connection 120 to the retail environment of Figure 1 and to other retail environments making use of the system. In a preferred embodiment, the administration system is implemented by a server farm, in which individual hardware systems are housed within racks, such as rack 1001. In the example shown in Figure 11, processing system 1002 oversees communication between other processing systems (or blades) mounted within the rack 1001. Each blade, such as blade 1003, has a processor with several central processing units, a local network connection and storage implemented as flash and volatile random access memory. Devices for reading media, such as CD ROM's etc are provided within the installation in order to allow new instructions to be installed. Where appropriate, additional units, such as unit 1004, may be present to provide additional storage capabilities.

### Figure 11

A schematic representation of the rack mounted system is illustrated in Figure 11. System 1002 oversees communications between the other systems, including system 1003. System 1002, as previously described, includes apparatus 1101 for reading media, such as a CD ROM 1102.

System 1003 includes a processor 1103 with a plurality of central processing units that communicate over an internal network 1104 via a network interface 1105. The processing units 1103 also access their own local storage devices 1106, implemented as flash and volatile random access memory. Several server systems may have similar storage and functionality to provide redundancy, thereby ensuring that the system is capable of handling a substantial number of user initiated sessions.

### Figure 12

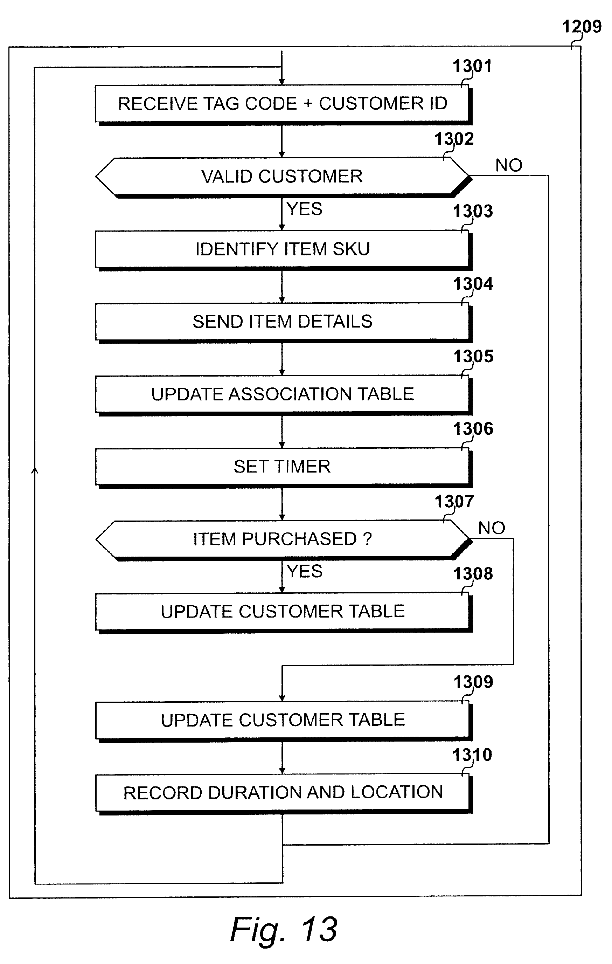

When switching on a new server blade for the first time, such as server blade 1003, as illustrated at step 1201, a question is asked at step 1202 as to whether the deactivation instructions have been installed. When answered in the affirmative, the activation instructions run at step 1209, as detailed in Figure 13.

If the question asked at step 1202 is answered in the negative, a question is asked at step 1203 as to whether the instructions are to be installed from the internet. If answered in the affirmative, instructions are downloaded at step 1204.

If the question asked at step 1203 is answered in the negative, installed files are copied from CD ROM 1102 at step 1205.

After installation at step 1204 or after installation at step 1205, an authentication procedure is performed at step 1206. Installation data includes a cryptographic key and during the authentication procedure 1206, this cryptographic key is compared with a public key available from the relevant supplier. This confirms that the instructions have come from a particular supplier and this is required (in a financial environment) to ensure that an authentic code will be installed, thereby taking a step to ensure that malicious code is not installed that may have access to personal and financial data. Thus, the authentication is checked at step 1207, such that the question asked at step 1207 will be answered in the negative if the code is not authentic and no installation procedure will occur. However, if the question asked at step 1207 is answered in the affirmative, confirming that the file is authentic, installation occurs at step 1208 and the running of the installed instructions may then follow at step 1209.

### Figure 13

Operations performed by the administration system 117 in order to implement an embodiment of the present invention are detailed in Figure 13. As indicated at 203, the mobile device 102 transmits a tag-code and a customer identification to the server 117 such that, at step 1301, the tag-code and the customer ID are received. At step 1302, a question is asked as to whether the customer identification is valid and when answered in the negative, no further action is taken. If the question asked at step 1302 is answered in the affirmative, to the effect that the data has been received from a valid customer, the relevant stock keeping unit code is identified for the item at step 1303 with reference to table 501. This then provides access to an SKU database, such that item details, including a price, may be returned to the mobile device 102.

From the perspective of the embodiment, an association has been identified between the customer and the item, resulting in an update of the association table, such as table 531, relevant for the particular customer. It is now necessary for the administration system to determine whether an actual purchase takes place and to achieve this, a timer is set at step 1306.

After an appropriate delay, a question is asked at step 1307 as to whether the item has been purchased. As previously described, in this embodiment, the administration system 117 does not oversee the actual sales transaction, which is coordinated by a separate sales system 124. However, sales system 124 returns data back to the administration system 117 confirming that sales have taken place. Thus, if the question asked at step 1307 is answered in the affirmative, the customer table 535 is updated appropriately with the purchased flag in column 538 being set.

If the question asked at step 1307 is answered in the negative, to the effect that the item has not been purchased, an appropriate update to customer table 535 is made at step 1309. As illustrated in table 532, the purchase flag is not set. Furthermore, at step 1310 the browsing duration is recorded at 543 and the location is recorded at 544. From the perspective of the merchandising system 125, the browse time and location data are of interest when a sale does not actually take place, given that this identifies the possibility of making a sale in the future.

### Figure 14

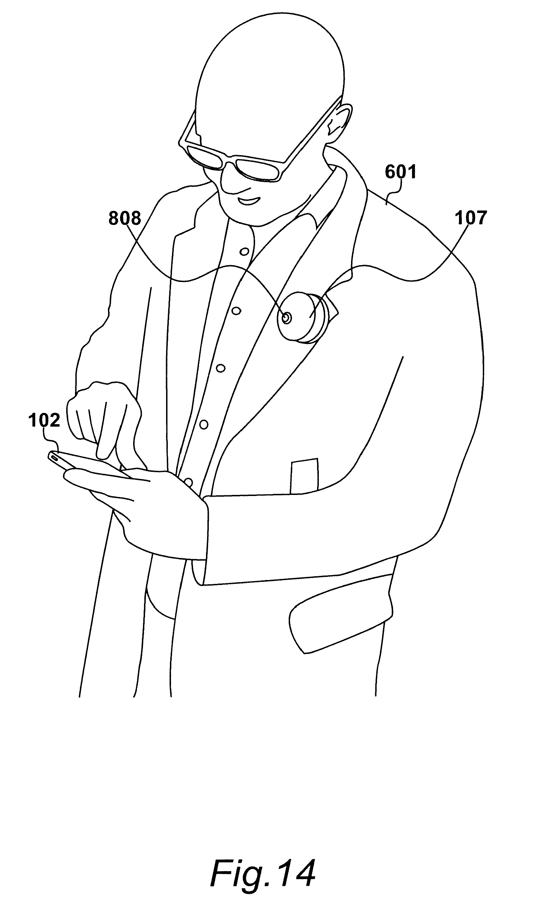

As illustrated in Figure 14, a customer has selected item 601 and taken the item to a changing room. Having confirmed that the item is of the correct size and fitting etc, the customer decides to make a purchase by interacting further with their mobile device 102. As previously described, this interaction is with the sales system 124.

The customer will have previously activated tag 107 by impacting their mobile device 102 upon it, as illustrated in Figure 7. This results, in this embodiment, in LED device 808 glowing red. This confirms that an association has been made; and the administration system 117 has been provided with data of this association. In an implementation, for example, users may only be allowed in changing areas if tags are illuminated in this way. Thus, if a theft is attempted, evidence is available as to who was interacting with the item under consideration.

Following the successful purchasing of the item, a deactivation signal is transmitted from the mobile device 102 to the tag 107, resulting in the colour of LED device 808 changing from red to green. This indicates that a sale has taken place. Thus, again, in a changing area, customers would be allowed to leave when tags are illuminated green with the item they have purchased; whereas, if a tag is still illuminated red, an assistant may be available to return the item to a display rack.

### Figure 15

After the successful purchasing of an item, resulting in LED device 808 glowing green, the tag is removed and customers would be invited to return removed tags to an appropriate receptacle for recycling, such as receptacle 1501. In an embodiment, the tag 107 consists of two parts such that, when released, a primary part 1502 separates from a secondary part 1503. As previously described, in an embodiment, it may be necessary for a customer to physically detach component 1503 from component 1502. Alternatively, the detachment may occur automatically and a further refinement may be present to the effect that the user may have control over this release and may be required to perform an additional manual interaction. In a further embodiment, a receptacle 1501 may include appropriate energising systems such that the tag will only release when in the vicinity of receptacle 1501, thereby removing the necessity for the tag to include power for the releasing mechanism and at the same time ensuring that tags are returned to receptacle 1501 to facilitate reuse.

### Figure 16

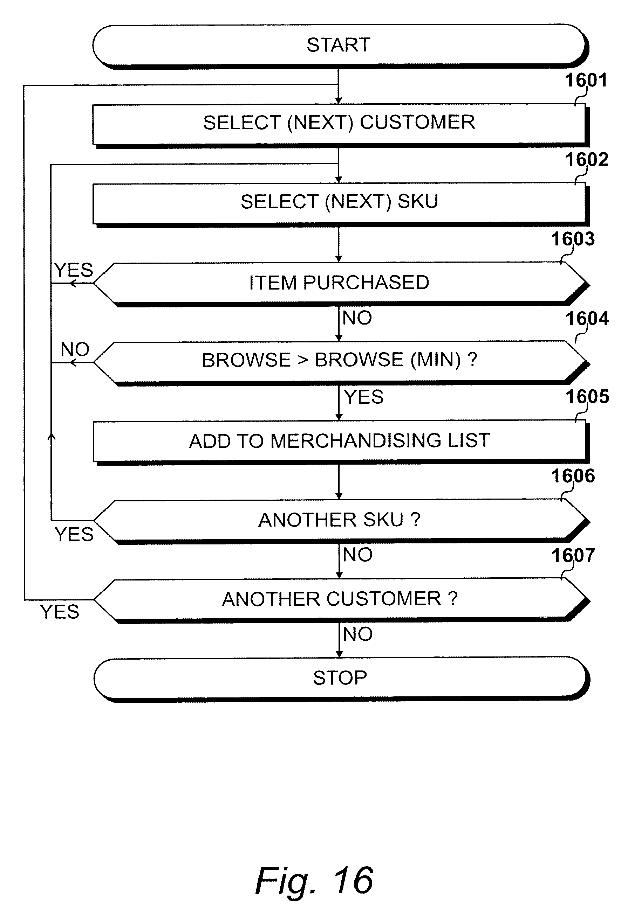

Operations performed by the mechanising system 125 are illustrated in Figure 16. This procedure is implemented after a predetermined period of time during which associations will have been recorded and some of these associations will have resulted in the making of a sale. The purpose of the procedure shown in Figure 16 is to identify associations that did not result in a sale; such that further merchandising activates can take place, as indicated at 215.

At step 1601, a customer table is selected, such as table 531. At step 1602, a SKU code is selected which, in this iteration, would be SKU code 521.

At step 1603, a question is asked at to whether the item was purchased. Thus, the flag at 538 has been set, indicating that the item was purchased; so the question is answered in the affirmative and the next SKU is selected at step 1602. As previously described, the procedure shown in Figure 16 is looking to identify instances where an association was recorded but the association did not then result in a sale.

If the question asked at step 1603 is answered in the negative, a question is asked at step 1604 as to whether the browsing time, read from column 539 for example, was greater than a predetermined minimum. The purpose of step 1604 is to reject trivial interactions in which, for example, a tag may have been activated by accident. If however the browse time is greater than the predetermined minimum, the interaction is added to a merchandising list at step 1605 and at step 1606 a question is asked as to whether another SKU is to be considered for that particular customer.

Thus, when answered in the affirmative, the next SKU is selected at step 1602. When answered in the negative, a question is asked at step 1607 as to whether another customer record is present and when answered in the affirmative, the next customer is selected at step 1601.

In the example, customer ID 534 will be selected on the next iteration, resulting in the identification of SKU code 522 at step 1602. On this occasion, the question asked at step 1603 will be answered in the negative, to the effect that a purchase did not take place. However, the customer was browsing for a significant period of time, therefore the question asked at step 1604 will be answered in the affirmative and the interaction will be added to the merchandising list at step 1605.

The generation of a merchandising list allows the merchandising system 125 to initiate further interactions with customers, possibly when the customer is identified as entering the relevant retail environment again. Thus, on entering the environment, the customer may receive a notification to the effect that there is a special offer in relation to the product previously considered but not purchased. As will be appreciated by those skilled in this particular field, further merchandising activities could be conducted and the presence of this information allows physical retailing operations to conduct similar exercises to those available within an online environment.

## Claims

1. An apparatus for monitoring activities within a retail environment, in which a plurality of items of merchandise are offered for sale and prospective customers carry mobile devices, **characterised by**:
a plurality of communication enabled tags (107-116), each attachable to a respective one of said items (601); and
an administration system (117) having a data processing system (118) and a data storage system (119), wherein each said tag includes:
a processor (802) configured to operate in a minimal power consumption mode;
an activating device (804) for bringing said processor out of said minimal power consumption mode and into an activated mode, following an interaction with one of said mobile devices(101); and
a radio transmission device (802) for transmitting a tag-code to an interacting mobile device to thereby associate a transmitting tag with an interacting mobile device; and:
each interacting mobile device is configured to relay said tag-code along with a customer identification code to said administration system; and:
at said administration system, said processing system is configured to write each association made between a tag-code and a customer identification code to said storage system (119).

2. The apparatus of claim 1, wherein each attached tag is releasable by a customer after the item of merchandise to which said tag is attached has been purchased.

3. The apparatus of claim 2, wherein the administration system is configured to return data back to an interacting mobile device to facilitate the purchasing of an item.

4. The apparatus of any of claims 1 to 3, wherein said activating device is a piezo-electric device (804) configured to generate an interrupt signal in response to receiving a physical impact.

5. The apparatus of any of claims 1 to 4, wherein:
said data storage system is configured to relate the tag-code (507) for each tag attached to an item to an item identification (521) for that item; and
said processing system is configured to record associations between one of said item identifications (521) and a customer identification (533).

6. The apparatus of claim 8, wherein said processing system is configured to record details (538) of a procurement following said step of recording said association between an item identification and a customer identification.

7. The apparatus of claim 6, wherein said processing system is configured to:
read data from said storage system;
identify instances of item-customer associations that did not result in a procurement; and
produce output data (215) detailing instances of non-procurement associations.

8. A method of monitoring activities within a retail environment, in which a plurality of items of merchandise (601) are being offered for sale to prospective customers each carrying a mobile device (101-106), comprising the steps of:
attaching a communication enabled tag (107) having a unique tag-code (507) to each said item (601);
activating said tag to bring said tag out of a minimal power consumption mode and into an operational mode in response to an interaction with one of said mobile devices (101);
transmitting said tag-code from operational tags to their respective interacting mobile device;
relaying said tag-code along with a customer identification code from interacting mobile devices to an administration system (117); and
at said administration system, recording each association made between an item identification code (507) and a customer identification code (533).

9. The method of claim 8, wherein said interaction between a tag and a mobile device involves manually contacting a mobile device (101) upon a tag (107) attached to an item of interest.

10. The method of claims 8 or claim 9, wherein item data (204) is returned from the administration system (117) back to an interacting mobile device (101).

11. The method of any of claims 8 to 10, wherein each attached tag is releasable by a customer and each tag is configured to generate an alarm if a tag is released before the item to which the tag is attached has been purchased.

12. The method of any of claims 8 to 11, further comprising the steps of:
relating tag-codes to item identifications during a tag attachment process (Fig 6); and
recording associations between item identifications (521) and customer identifications (533).

13. The method of claim 12, wherein details of associations between an item and a customer are analysed (Fig 16) when the association does not progress to a sale being made.

14. The method of claim 13, wherein durations (540) of association and locations at which associations were initiated are recorded.

15. The method of claim 13 or claim 14, wherein a merchandising system (125) is configured to supply merchandising data to customers recorded as forming an association that did not progress to a sale.
